Europäisches Patentamt

European Patent Office

Office européen des brevets

(19)

(11) Veröffentlichungsnummer: **0 001 235**
**A1**

(12) **EUROPÄISCHE PATENTANMELDUNG**

(21) Anmeldenummer: **78100812.3**

(22) Anmeldetag: **04.09.78**

(51) Int. Cl.²: **F 16 G 11/02**
**D 07 B 9/00**

(30) Priorität: **16.09.77 DE 2741665**

(43) Veröffentlichungstag der Anmeldung:
**04.04.79 Patentblatt 79/7**

(84) Benannte Vertragsstaaten:
**CH DE FR GB**

(71) Anmelder: **Bayer Aktiengesellschaft**
**Zentralbereich Patente,Marken und Lizenzen Bayerwerk**
**D-5090 Leverkusen 1(DE)**

(72) Erfinder: **Mönig, Dieter, Ing.-grad.**
**Hirschweg 58**
**D-5068 Odenthal(DE)**

(72) Erfinder: **Preis, Lothar, Dr.**
**Wolfskaul 7**
**D-5000 Köln 80(DE)**

(54) Vorrichtung zum Einleiten von Zugkräften in Zuggliedern aus gerichteten Faserverbundwerkstoffen.

(57) Vorrichtung zum Einleiten von Zugkräften in Zugglieder ausgerichteten Faserverbundwerkstoffen. Um von gerichteten Faserverbundwerkstoffen die hohe Zugfestigkeit auch der im Inneren des Faserbündels liegenden Fasern ausnützen zu können, wird das Faserbündel (1) im Verankerungsbereich zum Ende hin verjüngt (2).

Die jeweils aussenliegenden Fasern sind über Klebeoder Reibverbindungen mit dem Kraftweiterleitungselement (3) verbunden.

FIG. 1

BAYER AKTIENGESELLSCHAFT  5090 Leverkusen, Bayerwerk
Zentralbereich  Hö/bc/AB
Patente, Marken und Lizenzen

Vorrichtung zum Einleiten von Zugkräften in Zugglieder
aus gerichteten Faserverbundwerkstoffen

Die Erfindung betrifft eine Vorrichtung zum Einleiten von
Zugkräften in Zugglieder aus gerichteten Faserverbundwerkstoffen.

Faserverbundwerkstoffe mit unidirektionaler Faserorientierung haben in den vergangenen Jahren zunehmend an Bedeutung
gewonnen und werden wegen ihrer mechanischen Eigenschaften,
vor allem ihrer hohen Zugfestigkeit, ihrer guten Korrosionsbeständigkeit und ihres niedrigen spezifischen Gewichtes,
immer mehr für tragende Konstruktionen herangezogen. Bekannt
ist auch der Einsatz als Langstab-Hochspannungsisolator.

Problematisch ist jedoch die Verankerung der Zugglieder.
Es ist z.B. nicht möglich, große Kräfte in Faserverbundwerkstoffen über Klemmverbindungen einzuleiten, wie dies
beim Stahl üblich ist. Das gleiche gilt für Bolzenverbindungen, Verschraubungen und Verklebungen. Andere Methoden,
wie beispielsweise die Krafteinleitung über geschlossene
Faserschlaufen, sind sehr kompliziert und unwirtschaftlich.

Le A 18 313

Aufgabe der Erfindung ist es, eine einfache,sichere und wirtschaftlich herstellbare Vorrichtung zum Einleiten von Zugkräften in hochfeste Faserverbundwerkstoffe zu entwickeln. Die Festigkeit der Verbundwerkstoffe soll stärker als bisher ausnutzbar sein. Korrosionsbeständigkeit, einfache Handhabung, wirtschaftliche Herstellung und die Sicherheit der Verankerung spielen eine wichtige Rolle.

Diese Aufgabe wird dadurch gelöst, daß sich im Verankerungsbereich das Zugglied zum Ende hin verjüngt und dadurch sowohl äußere wie auch innere Fasern aus dem Zugglied durch eine Klebe- oder Reibverbindung mit den Kraftweiterleitungselementen verbunden sind.

Im Gegensatz zu herkömmlichen Krafteinleitungssystemen für hochfeste Faserverbundwerkstoffe, bei denen versucht wird, den Vollquerschnitt durch Kleben, Klemmen oder durch konische Stützung zu fassen, und die, wegen der Gefahr unterlaminarer Schubbrüche, auf verhältnismäßig kleine Querschnitte begrenzt sind, eignet sich die erfindungsgemäße Vorrichtung zur Einleitung von Kräften in Faserverbundwerkstoffe mit beliebig großem Querschnitt. Es wird erreicht, daß ein sehr großer Faseranteil des Faserverbundwerkstoffes zum Mittragen herangezogen wird.

Die Querschnittsform der Zugglieder kann beliebig sein. Aus Bearbeitungs- und Herstellungsgründen sind runde Querschnitte bevorzugt.

Nach einer Weiterbildung der erfindungsgemäßen Vorrichtung erfolgt die Verjüngung des Zuggliedes im Verankerungsbereich stufenweise. In einer besonderen Ausführungsform

Le A 18 313

nimmt die Länge der Stufen gegen Ende des Zuggliedes ab und/oder die Höhe der Stufen zum Ende des Zuggliedes zu, weil durch aufgebrachte Querdrücke zu Beginn des Verankerungsbereichs weiter innen liegende Fasern bereits teilweise beansprucht werden.

Die erfindungsgemäßen Krafteinleitungselemente eignen sich besonders für unidirektional verstärkte hochfeste Faserverbundwerkstoffe. Sowohl glasfaserverstärkte Kunststoffe als auch kohlefaserverstärkte Kunststoffe als auch GFK/KFK-Hybridwerkstoffe sind geeignet. Aber auch Faserverbundwerkstoffe mit heterogener Faserorientierung können eingesetzt werden.

Die Weiterleitung der am Zugglied angreifenden Kräfte in eine Konstruktion erfolgt durch metallische Kraftweiterleitungselemente auf konventionelle Weise, z.B. über Schraubverbindungen, durch Schweißen, über Bolzenanschlüsse, durch Direkteinbettung beispielsweise in Beton. Die Vorrichtung ist auch geeignet zur Kopplung von Zuggliedern.

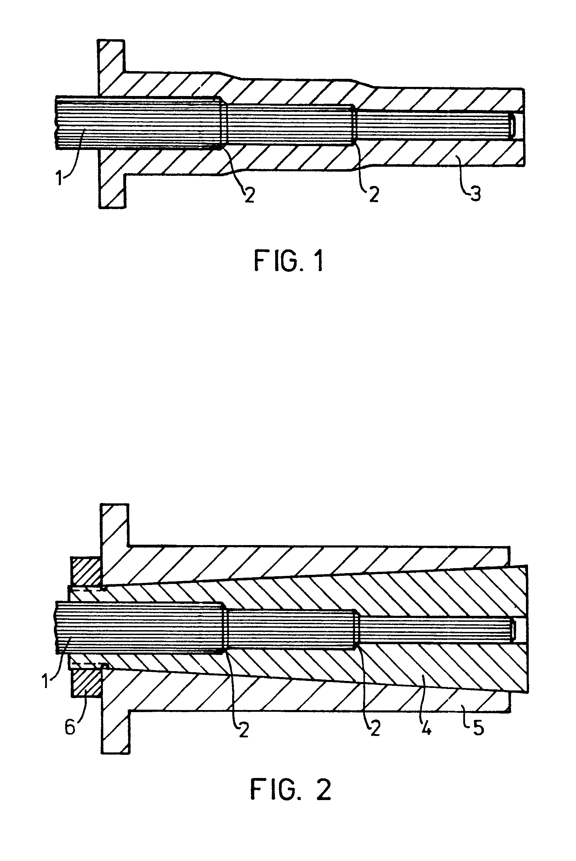

Die Vorrichtung ist in den Figuren dargestellt und im folgenden beispielhaft beschrieben. Es zeigen
Figur 1    eine Quetschverbindung,
Figur 2    eine Konusverbindung.
Das Zugglied 1 aus unidirektional glasfaserverstärktem Kunststoff verjüngt sich im Verankerungsbereich stufenförmig. Die Stufen 2 lassen sich mit einer entsprechend eingestellten Schneidvorrichtung mit Stützrollen in einem Arbeitsgang herstellen. Über das Ende wird eine Metallquetschhülse 3 geschoben und verpreßt.

Le A 18 313

0001235

Das ähnlich wie im ersten Beispiel vorbereitete Ende des
Zuggliedes 1 wird in die geschlitzte Klemmhülse 4 gesteckt,
über die eine Konushülle 5 geschoben wird. Durch Anziehen der
Schraube 6 kann die Klemmspannung vergrößert werden. Eine
Schrumpfspannung kann zusätzlich dadurch aufgebracht werden,
daß die Hülse 5 vor der Montage erwärmt wird.

Le A 18 313

Patentansprüche

1) Vorrichtung zum Einleiten von Zuggkräften in Zugglieder aus gerichteten Faserverbundwerkstoffen, dadurch gekennzeichnet, daß sich im Verankerungsbereich das Zugglied (1) zum Ende hin verjüngt und dadurch sowohl äußere wie auch innere Fasern aus dem Zugglied (1) durch eine Klebe- oder Reibverbindung mit den Kraftweiterleitungselementen (3,4) verbunden sind.

2) Vorrichtung nach Anspruch 1, dadurch gekennzeichnet, daß als Faserverbundwerkstoff glasfaserverstärkter Kunststoff oder kohlefaserverstärkter Kunststoff oder ein aus beiden Werkstoffen zusammengesetzter Hybridwerkstoff verwendet wird.

3) Vorrichtung nach den Ansprüchen 1 und 2, dadurch gekennzeichnet, daß die Verjüngung zum Ende des Zuggliedes hin stufenweise erfolgt.

4) Vorrichtung nach Anspruch 3, dadurch gekennzeichnet, daß zum Ende hin die Länge der Stufen abnimmt und/oder die Höhe der Stufen zunimmt.

Le A 18 313

FIG. 1

FIG. 2

| | Europäisches Patentamt | **EUROPÄISCHER RECHERCHENBERICHT** | Nummer der Anmeldung |
|---|---|---|---|
| | | | EP 78 10 0812 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | RESEARCH DISCLOSURE, Band 177, Nr. 138, Oktober 1975, Emsworth GB, "Terminations and splices for ropes and cables", Seiten 14,15, Artikelnummer 13 827 <br><br> * Seite 14, linke Spalte, Absatz 1; rechte Spalte, Absatz 2; Seite 15, linke Spalte, Absätze 2-4; Abbildungen 4,5 * | 1,3,4 |
| | GB - A - 1 014 112 (BRITISH ROPES) <br> * Seite 1, Zeile 73 bis Seite 2, Zeile 6; Abbildungen 1,2 * | 1,3 |
| | FR - A - 2 193 446 (DERVAUX) <br> * Seite 6, Zeilen 7-15; Abbildungen 13,14 * | 1,3,4 |
| | US - A - 3 152 392 (COPPACK) <br> * Spalte 2, Zeilen 42-72; Spalte 3, Zeilen 23-29; Abbildung 5 * | 2 |

**KLASSIFIKATION DER ANMELDUNG (Int.Cl.²)**

F 16 G 11/02
D 07 B 9/00

**RECHERCHIERTE SACHGEBIETE (Int. Cl.²)**

F 16 G 11/00
D 07 B 9/00
F 16 B 7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilia, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-11-1978 | SIGWALT |

EPA form 1503.1   06.78